# EUROPEAN PATENT APPLICATION

(11) **EP 4 480 718 A1**
(43) Date of publication of application: **25.12.2024**
(21) Application number: 24182752.6
(22) Date of filing: 18.06.2024
(51) Int. Cl.: B60C 11/03, B60C 11/12, B60C 11/13

(54) **TIRE TREAD WITH CIRCUMFERENTIAL TREAD GROOVE**

(30) Priority: 20.06.2023 US 202363509146 P; 13.03.2024 US 202418603794
(71) Applicant: The Goodyear Tire & Rubber Company, Akron, OH 44316 (US)
(72) Inventor: GUILFORD, John Stephen, Seville, 44273 (US); BECKER, Derek John, Munroe Falls, 44262 (US)
(74) Representative: Kutsch, Bernd

(57) **Abstract**

A tire (1) is disclosed comprising a tread (10) having a tread groove (30) extending continuously in the circumferential direction, wherein the tread groove (30) as a top portion (31), a bottom portion (33) and a transition portion (32) located radially between the top portion (31) and the bottom portion (33). In one aspect, a maximum axial width of the tread groove (30) in the top portion (31) is 2 mm, wherein the tread groove (30) has axially opposed sidewalls (25, 26), and wherein the axially opposed sidewalls are tapered towards each other in the bottom portion (33) when moving radially inwards, and wherein the opposed sidewalls in the transition portion (32) are tapered away from each other when moving radially inwards, In another aspect, the tread groove (30) has over most of its circumferential length a cross-section in which a maximum axial width in the top portion (31) is at least 5% smaller than an axial width in the bottom portion (33), as measured at 5% of a total radial height of the tread groove (30) from the bottom of the tread groove (30), in which the axial width in the bottom portion (33) is at least 5% smaller than a maximum axial width of the tread groove (30) in the intermediate portion (32), and in which the maximum axial width of the tread groove (30) in the intermediate portion (32) is within a range of from 15% to 50% of the total radial height of the tread groove (30).

## Description

### Field of the Invention

The present invention is directed to a tire tread, preferably a truck tire tread. Furthermore, the present invention is directed to a tire comprising a tread. The tire may also be retreaded with the tread.

### Background of the Invention

Tire performance has significantly improved over the past decades. In particular, in the technical field of truck tires, rolling resistance and treadwear have been successfully improved. Thereby, environmental impact of tires has decreased and more cost-efficient products have been provided. However, there is still a desire to further improve efficiency of tires, particularly to further reduce rolling resistance and thus energy consumption. At the same time, it is desirable to provide tires with advantageous performance, such as grip, e.g., wet grip. While progress has been made over the past years, room for improvement remains.

### Summary of the Invention

The invention relates to a tire in accordance with claim 1.

Dependent claims refer to preferred embodiments of the invention.

In a first preferred aspect, the present invention is directed to a tire tread, wherein the tire tread comprises two tread shoulder portions comprising a first tread shoulder portion and a second tread shoulder portion, and a tread center portion arranged axially between the two tread shoulder portions. The first tread shoulder portion comprises a first circumferential shoulder rib and the second tread shoulder portion comprises a second circumferential shoulder rib, wherein each shoulder rib is delimited by a circumferential shoulder groove. The tread center portion comprises at least two adjacent circumferential tread ribs delimiting a circumferential tread groove. The tread groove has a top portion, a bottom portion and an intermediate portion radially between the top portion and the bottom portion. The tread groove has over most of its circumferential length a cross-section in which a maximum axial width in the top portion is at least 5% smaller than an axial width of the tread groove in the bottom portion, measured at 5% of the total radial height of the tread groove from the bottom of the groove. Furthermore, in said cross-section, the axial width of the tread groove in the bottom portion, also measured at 5% of the total radial height of the tread groove from the bottom of the groove, is at least 5% smaller than a maximum axial width of the tread groove in the intermediate portion. Moreover, and still in the cross-section, the maximum axial width of the tread groove in the intermediate portion is within a range of 15% to 50% of the total radial height of the tread groove.

In a second preferred aspect of the present invention, the present invention is directed to a tire having a tread comprising two tread shoulder portions comprising a first tread shoulder portion and a second tread shoulder portion, and a tread center portion arranged axially between the two tread shoulder portions. The first tread shoulder portion comprises a first circumferential shoulder rib comprising a circumferential row of shoulder tread blocks, and the second tread shoulder portion comprises a second circumferential shoulder rib comprising a second circumferential row of shoulder tread blocks, wherein each shoulder rib is delimited by a circumferential shoulder groove. The tread center portion comprises at least two adjacent circumferential tread ribs delimiting a circumferential tread groove. Each circumferential tread rib comprises a circumferential row of center tread blocks separated by lateral grooves. The tread groove has a top portion, a bottom portion and an intermediate portion radially between the top portion and the bottom portion. Furthermore, the tread groove has over most of its circumferential length a cross-section in which a maximum axial width in the top portion is at least 5% smaller than an axial width in the bottom portion, measured at 5% of a total radial height of the tread groove from the bottom of the tread groove. Moreover, in the cross-section, the axial width in the bottom portion, measured at 5% of the total radial height of the tread groove from the bottom of the tread groove, is at least 5% smaller than a maximum axial width of the tread groove in the intermediate portion. In addition, still in the cross-section, the maximum axial width in the intermediate portion is within a range of 15% to 50% of the total radial height of the tread groove.

The tire may be one or more or any combination of: a truck tire, a trailer tire, a 22.5 inch tire, a pneumatic tire, a tire having three circumferential tread grooves and two circumferential shoulder grooves, a tire having four steel reinforced belt plies, a tire retreaded with the tread, a tire having a steel reinforced carcass ply, a tire having two bead areas comprising each a bead, a carcass ply extending between the two bead areas, wherein the carcass ply is radially covered by reinforced belt plies in a crown area of the tire, and wherein the belt plies are arranged radially below the tread, a tread having at least two radially superposed tread layers, wherein the tread layer contacting the road when driving defines the bottoms and sidewalls of the grooves.

Preferably, the tire is a 22.5 inch truck tire or a 22.5 inch truck trailer tire.

### Brief Description of the Drawings

The invention will be described by way of example and with reference to the accompanying drawings in which:
FIG. 1 is a schematic cross-sectional view of a truck tire in accordance with a first preferred embodiment of the present invention;
FIG. 2 is a schematic cross-sectional view of another truck tire in accordance with a second preferred embodiment of the present invention;
FIG. 3a is an enlarged cross-sectional view of a (center) tread groove in accordance with the embodiment of Figure 1;
FIG. 3b is an enlarged cross-sectional view of a shoulder groove in accordance with the embodiment of Figure 1;
FIG. 4a is an enlarged cross-sectional view of a (center) tread groove in accordance with the embodiment of Figure 2;
FIG. 4b is an enlarged cross-sectional view of a shoulder groove in accordance with the embodiment of Figure 2; and
FIG. 5 is a schematic sideview of a tire having a tread in accordance with another embodiment of the present invention.

### Detailed Description of Preferred Embodiments of the Invention

In one aspect, the present invention is directed to a tire tread, wherein the tire tread comprises two tread shoulder portions comprising a first tread shoulder portion and a second tread shoulder portion, and a tread center portion arranged axially between the two tread shoulder portions. The first tread shoulder portion comprises a first circumferential shoulder rib and the second tread shoulder portion comprises a second (or another) circumferential shoulder rib, wherein each shoulder rib is delimited by a circumferential shoulder groove. The tread center portion comprises at least two adjacent circumferential tread ribs delimiting (between them) a circumferential tread groove. The tread groove has a (radial) top portion, a (radial) bottom portion and an intermediate portion radially between the top portion and the bottom portion. The tread groove has over most of its circumferential length a cross-section in which a maximum axial width in the top portion is at least 5% (preferably at least 10%) smaller than an axial width of the tread groove in the bottom portion, measured at 5% of the total radial height of the tread groove from the bottom of the groove (in the cross-section). Furthermore, in said cross-section, the axial width of the tread groove in the bottom portion, also measured at 5% of the total radial height of the tread groove from the bottom of the groove and in the cross-section, is at least 5% (preferably at least 10%) smaller than a maximum axial width of the tread groove in the intermediate portion of the cross-section. Moreover, still in the cross-section, the (length of the) maximum axial width of the tread groove in the intermediate portion is within a range of 15% to 50% of the (length of the) total radial height of the tread groove.

Thus, a tire and/or a tread design in accordance with the present invention has circumferential tread grooves having over most of their circumferential length a relatively narrow top portion, a relatively wide intermediate portion, and an again narrower bottom portion. Taking into account the ranges mentioned above, the inventors have found that rolling resistance can be reduced in early tire life, whereas wet traction can be significantly improved after reduction of the non-skid level upon further wear of the tire.

In one embodiment of the invention, in said cross-section, the top portion (radially) extends over 20% to 40% (preferably, over 22% to 40%) of the total radial height of the tread groove. Thus, the relatively narrow top portion extends over a significant height of the groove, which helps to provide the unworn or new tire tread with stiffness and/or reduced rolling resistance.

In another embodiment of the invention, still in said cross-section, the bottom portion extends (down) from the height of the maximum axial width of the intermediate portion to the bottom of the groove.

In still another embodiment, in said cross-section, the bottom portion has one or more of: a radial height within a range of 35% to 65% (preferably from 40% to 50%, or to 49%) of the total radial height of the tread groove; two (opposite) sidewalls tapering along or in an inner radial direction; two sidewalls, wherein at least one of the sidewalls has an angle with the axial direction which is within a range of 65° to 85°, preferably 70° to 85°. Preferably, the angles and/or orientations of two sidewalls are opposite to each other.

In still another embodiment, in said cross-section, the top portion has one or more of: (essentially) parallel sidewalls; at least partially straight sidewalls; two sidewalls extending (essentially) in parallel to the radial direction; a constant (axial) width along the radial height; a maximum axial width within a range of 1%, preferably of 2% to 10%, preferably to 5%, of the total radial height of the tread groove; and a radially innermost end (e.g., at which the two sidewalls cease to be parallel) at a radial height within a range of 55% to 80%, preferably 60% to 75%, of the total radial height of the tread groove, measured in the radial direction from the bottom of the tread groove.

In another embodiment, in the cross-section, the intermediate portion has at its radially outermost position an axial width which is identical to the axial width of the top portion (e.g., at the radially innermost end of the top portion) and which widens or increases along a radially inner direction to the maximum axial width of the intermediate portion.

Preferably, still in the cross-section, the maximum axial width of the intermediate portion is also the (overall) maximum axial width of the tread groove in the cross-section.

In still another embodiment, the width of the tread groove widens or increases continuously (from the radially outermost position of the intermediate portion) along the radially inner direction so as to reach the maximum axial width of the intermediate portion, all within the cross-section.

In still another embodiment, and still in the cross-section, the bottom portion extends from the radial position of the maximum axial width of the intermediate portion (and/or the tread groove) down to the bottom of the tread groove.

In still another embodiment of the present invention, and in the cross-section, the bottom portion tapers, e.g., continuously, and/or is preferably straight over at least 70% of its radial height, from its radially outermost position or radially outer position towards the bottom of the groove. In particular, such a feature may support improved demolding of the tread and/or helps to limit undesired stone collection upon driving.

In yet another embodiment, in the cross-section, the maximum axial width of the tread groove, and/or the intermediate portion is or corresponds to one or more of: less than 60% (preferably less than 50%) of the maximum axial width of the shoulder groove, for instance, each shoulder groove; more than 30% of the maximum axial width of the shoulder groove; 20% to 50% of the total radial height of one or more of the tread groove and the shoulder groove; present at a radial height within a range of 35% to 65% (preferably 40% to 60% or even more preferably 45% to 55%) of the total height of the tread groove, measured in the radial direction from the bottom of the tread groove.

In an embodiment, one or more of ranges mentioned herein for tread grooves, apply to each tread groove of the tread. It is also possible that the ranges mentioned herein for shoulder grooves apply to each shoulder groove of the tread. In addition, or alternatively, one or more of ranges, percentages and values mentioned herein apply to said cross-section.

In another embodiment, in said cross-section, a total cross-sectional area of the tread groove is less than 35% of a total cross-sectional area of the shoulder groove, preferably in the same circumferential position, and/or more than 15% of a total cross-sectional area of the shoulder groove, preferably in the same circumferential position.

In still another embodiment, a cross-section is a plane comprising or spanned by the axial and the radial directions of the tire, and/or which is perpendicular to the circumferential direction.

In still another embodiment, in the cross-section, the maximum axial width of the top portion (which may be essentially constant, or constant, radially along the top portion) of the tread groove has one or more of: less than 25%, preferably less than 20%, of a maximum axial width of the intermediate portion and/or the tread groove; more than 5%, preferably more than 10%, of the maximum axial width of the intermediate portion and/or the tread groove; less than 10% of a maximum axial width of the shoulder groove; more than 3% of the maximum axial width of the shoulder groove;

Typically, the maximum axial width of the shoulder groove is present at its radially outermost opening.

In another embodiment, the tread shoulder groove has over most of its circumferential length one or more of: an essentially V-shaped cross-section, or a V-shape, wherein, optionally, the bottom of the shoulder groove has a curved shape; two sidewalls having opposite angles within a range of 75° to 85° with the axial direction; a shape tapering from its radially outermost portion or side to its radially innermost bottom.

In another embodiment, in the cross-section, one or both sidewalls of the bottom portion extend straightly over at least 70% of the radial height of the bottom portion.

In still another embodiment, in the cross-section, one or both sidewalls of the intermediate portion extend straightly over at least 25% of the radial height of the intermediate portion. Preferably, such straight portion or section may have an angle with the axial direction within a range of 25° to 60°, preferably from 30° to 55°.

In still another embodiment, in the cross-section, the tread groove has an amphora-like cross-sectional shape. Optionally, in a cross-sectional view, it has a bottleneck portion (i.e., top portion) which is narrower than the area radially below the bottle neck and which widens below the lower end of the bottle neck in a first portion (i.e., intermediate portion) so as to reach a maximum width, and which constricts again in a bottom portion below the first portion or intermediate portion towards its radial bottom.

The present invention and embodiments mention different types of circumferential ribs or circumferential tread ribs. The term rib or circumferential rib preferably also encompasses circumferential rows of tread blocks, which are optionally arranged behind one another in a circumferential direction. This may particularly apply to shoulder ribs and/or center ribs. In addition, or alternatively, rows of tread blocks comprise tread blocks separated by lateral grooves. Lateral grooves can have angles with the axial direction. Such angles are preferably smaller than 40°, 30°, or 20°. Lateral grooves may comprise sipes, such as zig-zag sipes. An angle of a zig-zag sipe mentioned herein is determined between the axial direction and a line connecting both axially outermost ends of the zig-zag sipe.

In still another embodiment, in the cross-section, the tread groove, and/or the bottom portion of the tread groove, has at 5% of its total radial height, measured from the bottom of the tread groove, an axial width within a range of 30% to 60% of the maximum axial width of the tread groove and/or the intermediate portion of the tread groove.

In still another embodiment, and still in the cross-section, each sidewall of the tread groove has, in the intermediate portion, an / at least one inflection point between a radial height of maximum axial thickness and a radial height of minimum axial thickness of the tread groove in the intermediate portion.

In still another embodiment, a tangent fitted to said inflection point of the sidewall has an angle with the axial direction within a range of 25° to 60°, preferably from 30° to 55°.

In another aspect, the invention is directed to a tire comprising such as tread.

In one embodiment, the tire is selected from one or more of a truck tire; a trailer tire; a 22.5 inch tire; a 24.5 inch tire; a pneumatic tire; a tire having three circumferential tread grooves and two circumferential shoulder grooves; a tire having four steel reinforced belt plies; a tire retreaded with the tread; a tire having a steel reinforced carcass ply; a tire having two bead areas comprising each a bead, a carcass ply extending between the two bead areas, wherein the carcass ply is radially covered by reinforced belt plies in a crown area of the tire, and/or wherein the belt plies are arranged radially below the tread; a multilayered tread having at least two radially superposed tread (e.g. tread cap) layers, wherein the tread layer (e.g., tread cap layer) contacting the road when driving defines or forms the bottoms and/or sidewalls of the grooves.

In another embodiment, the tire is one of a 22.5 inch (1 inch = 2.54 cm) truck tire, a 24.5 inch truck tire, a 22.5 inch truck trailer tire, and a 24.5 inch truck trailer tire.

In the second aspect, the present invention is directed to a tire having a tread comprising two tread shoulder portions comprising a first tread shoulder portion and a second tread shoulder portion, and a tread center portion arranged axially between the two tread shoulder portions. The first tread shoulder portion comprises a first circumferential shoulder rib comprising a circumferential row of shoulder tread blocks, and the second tread shoulder portion comprises a second circumferential shoulder rib comprising a second circumferential row of shoulder tread blocks, wherein each shoulder rib is delimited by a circumferential shoulder groove. The tread center portion comprises at least two adjacent circumferential tread ribs delimiting a circumferential tread groove. Each circumferential tread rib comprises a circumferential row of center tread blocks separated by lateral grooves. The tread groove has a top portion, a bottom portion and an intermediate portion radially between the top portion and the bottom portion. Furthermore, the tread groove has over most of its circumferential length a cross-section in which a maximum axial width in the top portion is at least 5% smaller than an axial width in the bottom portion (of the cross-section), measured at 5% of a total radial height of the tread groove from the bottom of the tread groove (in the cross-section). Moreover, in the cross-section, the axial width in the bottom portion, measured at 5% of the total radial height of the tread groove from the bottom of the tread groove, is at least 5% smaller than a maximum axial width of the tread groove in the intermediate portion of the cross-section. In addition, still in the cross-section, the maximum axial width in the intermediate portion is within a range of 15% to 50% of the total radial height of the tread groove.

In one embodiment, the tread has two, three, or four circumferential center ribs and two circumferential shoulder ribs. Preferably, the tread has three circumferential center ribs.

In another embodiment, a majority of the lateral grooves comprise a lateral sipe, preferably comprising a zig-zag shape.

In still another embodiment, a majority of the lateral grooves comprise a lateral cut-out at each of both axially outer ends of the lateral groove and/or each of the adjacent tread blocks.

In still another embodiment, in the circumferential rows of center tread blocks of two axially outer (or outermost and/or opposite) center ribs, circumferentially adjacent tread blocks are separated by sipes comprising a zig-zig shape. Optionally, every second sipe comprising the zig-zag shape extends to the radially outermost surface of the adjacent tread blocks and the remaining sipes having the zig-zag shape of the same rows of center tread blocks extend from their radially inner bottom to a radial position at least 10%, or 20% (and optionally at most 70%) below the radially outermost surface of the adjacent tread blocks. Optionally, the respective lateral groove is circumferentially broader than the zig-zag shape and/or linear, radially above said radial position.

In another embodiment, in a circumferential row of center tread blocks which is crossed by the equatorial plane of the tire, all tread blocks are separated by lateral zig-zag sipes.

In still another embodiment, the tire comprises a circumferential tread groove axially divided by the equatorial plane of the tire.

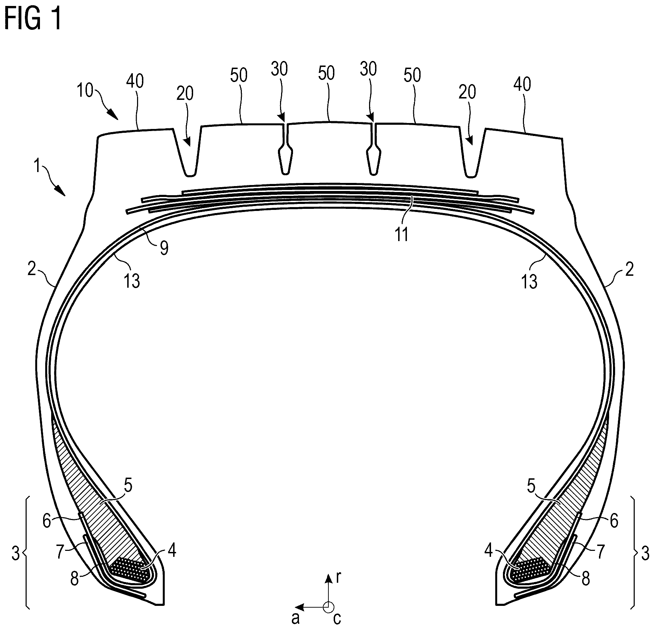

Figure 1 shows a schematic cross section of a tire 1 according to a preferred embodiment of the invention. The tire 1 has a tread 10, an inner liner 13, a belt structure 11 comprising four belts, a carcass ply 9, two sidewalls 2, and two bead regions 3 comprising bead filler apexes 5 and beads 4. The example tire 1 is suitable, for example, for mounting on a rim of a vehicle, e.g. a truck. The carcass ply 9 includes a pair of axially opposite end portions 6, each of which is secured to a respective one of the beads 4. Each axial end portion 6 of the carcass ply 9 is turned up and around the respective bead 4 to a position sufficient to anchor each axial end portion 6. The carcass ply 9 may be a rubberized ply having a plurality of substantially parallel carcass reinforcing members, e.g., made of metal. The turned-up portions 6 of the carcass ply 9 may engage the axial outer surfaces of two flippers 8 and axially inner surfaces of two chippers 7. As shown in Figure 1, the example tread 10 can have four circumferential grooves.

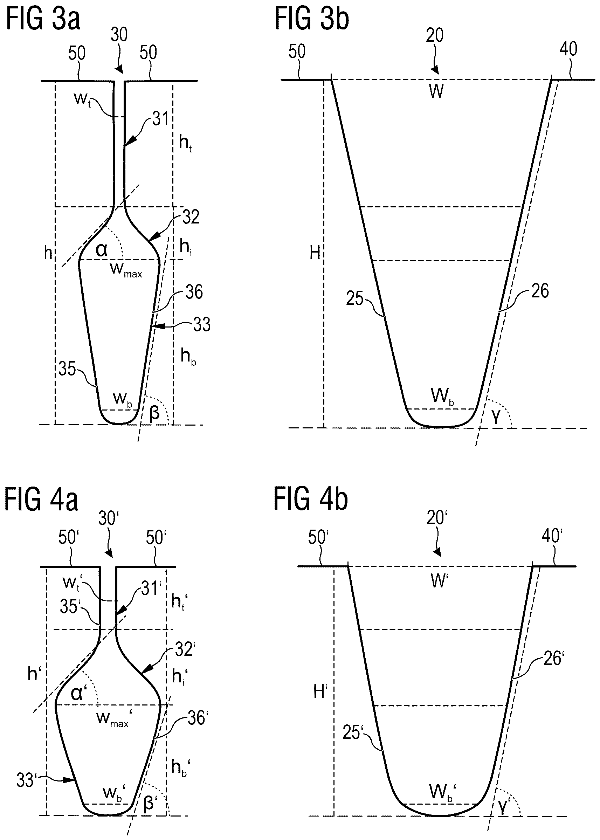

Still in accordance with the embodiment shown in Figure 1, the tire tread 10 has two axially outer shoulder ribs 40 and three center tread center ribs 50. A shoulder rib 40 is delimited by one of the shoulder grooves 20. The grooves formed between center tread ribs 50 are mentioned herein as tread grooves 30. As visible in Figure 1, shoulder grooves 20 and tread grooves 30 have different cross-sectional shapes as shown in further detail in Figures 3a and 3b. As mentioned herein above, the tread ribs 40, 50 may comprise or be formed of circumferential rows of tread blocks.

The axial direction a, the radial direction r and the circumferential direction c are indicated in multiple Figures herein. The axial direction a is parallel to the axis of rotation of the tire, the radial direction r is perpendicular to the axial direction a, and the circumferential direction c is perpendicular to the radial and axial directions. A reference to one of these directions does not mandatorily include a specific orientation if not indicated otherwise.

Figure 3A shows a tread groove 30 between two tread center ribs 50. The tread groove 30 has a total height h. Along its height h, the groove 30 has three adjacent and/or consecutive portions or sections, i.e., a top portion 31 having the height hₜ, a bottom portion 33 having the height h_{b} and an intermediate portion 32 arranged directly adjacent and radially between the top portion 31 and the bottom portion 33, wherein the intermediate portion 32 has the radial height hᵢ. The top portion 31 has in the present embodiment the width wₜ, which is constant along the radial direction in this example. The intermediate portion 32 has a varying width with a maximum axial with Wₘₐₓ. In particular, the width of the intermediate portion 32 continuously increases from a radially upper position to a radially lower position. The bottom portion 33 also has a varying width with an axial width W_{b}, measured at a radial position of 5% of the total radial height h from the bottom of the tread groove 30. While the top portion 31 has preferably a constant axial groove width, the axial width of the intermediate portion 32 of the groove 30 increases until reaching a maximum at its bottom / the lower end of the intermediate portion 32. From that radial position, the axial width of the groove 30 tapers in its bottom portion 33 towards the bottom of the groove 30. Unless otherwise indicated herein, widths of grooves are measured in an axial direction from one sidewall 35 of a groove to the opposite sidewall 36 of the same groove, and/or heights are measured in the radial direction.

It is noted herein that the cross-section of groove 30 shown in Figure 3 applies to most portions along the circumferential length of groove 30. In particular, the tread 10 and/or ribs 40, 50 may comprise lateral grooves, e.g., separating adjacent tread blocks. For instance, such a cross-section, or other circumferential cross-sections shown herein, may be present over at least 50%, or over at least 70% of the circumferential length of the respective circumferential groove. Similarly, it is also possible that such cross-sections are present over at least 50%, or over at least 70% of the circumferential length of tread blocks (or, in other words, each tread block) forming sidewalls of the respective groove.

Still in accordance with the same embodiment, the width wₜ is preferably within a range of 2% to 10%, preferably to 6%, of the total radial height h and/or less than 25% of the maximum axial width Wₘₐₓ of the intermediate portion 32/tread groove 30. In an example, the width Wₜ is within a range of 0.5 mm to 2 mm, preferably to 1.5 mm.

The maximum width Wₘₐₓ of the groove 30 and/or the intermediate portion 32 is preferably within a range of 20% to 45%, preferably 20% to 35%, or 20% to 30% of the total radial height h, and/or in an example, within a range of 4 mm to 9 mm, or preferably 5 mm to 8 mm.

The width W_{b} is preferably in a range of 30% to 60% of Wₘₐₓ and/or within a range of 6% to 19% of the height h. In an example, the width W_{b} may be in a range of 1.5 mm to 4 mm, or from 2 mm to 3.5 mm.

In the present embodiment, the total height h is optionally within a range of 20 mm to 50 mm (or to 40 mm, or just to 30 mm).

The height hₜ is preferably within a range of 30% to 40% of the radial height h, and/or 7 mm to 12 mm, preferably from 7 mm to 10 mm.

The height hᵢ is preferably within a range of 10% to 25% of the radial height h, and/or preferably within a range of 2 mm to 7 mm, or 3 mm to 6 mm.

The height h_{b} is preferably within a range of 40% to 55% of the radial height h, and/or from 9 mm to 14 mm.

In the tapering bottom portion 33, the sidewalls 35, 36 (and/or their straight sections mentioned herein) can have an angle β with the axial direction a, which is preferably within a range of 75° to 89°, preferably from 75° to 85°.

Preferably, portions or sections of the sidewalls 35, 36 in the bottom portion 33 can linearly extend over at least 70% of their length from a radially outer position to a radially inner position.

The intermediate portion 32 preferably has an inflection point between its radial top and radial bottom. In this inflection point, a tangent fitted to one of the sidewalls 35, 36 has preferably an angle α with the axial direction a within a range of 40° to 55°, preferably from 40° to 50°.

Optionally, one or both sidewalls 35, 36, or sections of those, are straight over at least 25% of the radial height of the intermediate portion 32. Such a straight section may have an angle α with the axial direction a within a range of 40° to 55°, preferably from 40° to 50°.

Figure 3b shows a magnification of a shoulder groove 20, at essentially the same scale as the (center) tread groove 30 shown in Figure 3a. The total height of the groove 20 is shown as H and essentially corresponds in this example to the height h of groove 30. The sidewalls 25, 26 of the shoulder groove 20, tapering in a radially inner direction, have each an absolute angle γ with the axial direction a, which is within a range of 75° to 85°. The shoulder groove's 20 width at the (radially outermost) groove opening to the (outermost) tread surface is W, which is within a range of 50% to 70% (preferably 55% to 65%) of the total radial groove height H, which may be for instance from 12 mm to 16 mm or from 13 mm to 15.5 mm. The width W_{b} is measured at a position of 5% of the radial height H and can be within a range of 15% to 25% of H, and/or from 25% to 40% of W, and/or from 3 mm to 7 mm, preferably from 4 mm to 6 mm.

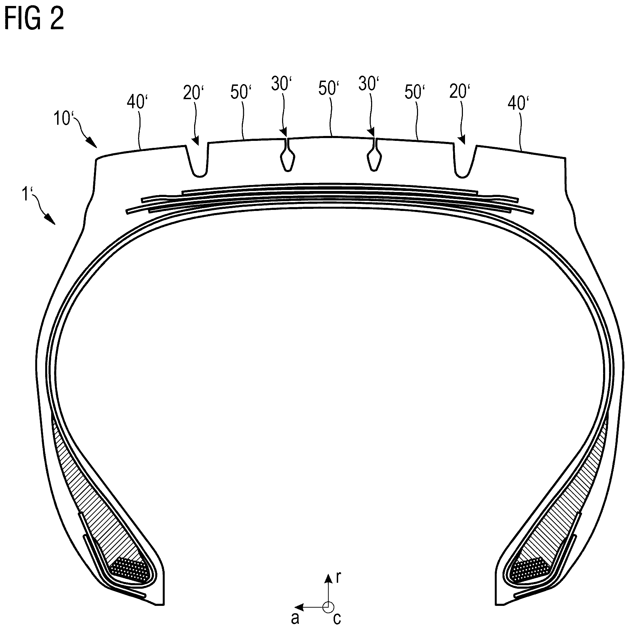

Similar to Figure 3a, Figure 4a shows another embodiment of a tread groove 30' corresponding to the design schematically shown in Figure 2.

In particular, in accordance with this embodiment of the present invention, Figure 2 shows a tire 1' having a tread 10' with shoulder ribs 40', (center) tread ribs 50', shoulder grooves 20' and (center) tread grooves 30'. The groove design of this tire tread 10' is different than that of tread 10 according to Figure 1.

Figure 4a, which shows a magnified view of a groove 30' between two tread grooves 50'of the tire 1' as shown in Figure 2, indicates the full groove height h', the height of the a top portion 31' of the groove 30' as hₜ', the height of the intermediate portion 32' as hᵢ', the height of the bottom portion 33' as h_{b}', the width of the top portion 31' as wₜ', the maximum width of the intermediate portion 32' as wₘₐₓ', and the width of the bottom portion 33' of the groove 30', determined at 5% of the total height h' of the groove 30', as W_{b}'. The sidewalls 35', 36' (particularly, straight parts or sections thereof) have an angle β' with the axial direction in the bottom portion 33'. Furthermore, in the intermediate portion 32', the sidewalls 35', 36' (or straight parts or sections thereof) have an angle α' with the axial direction at an inflection point between the radially inner end of the top portion 31' and the radially outer end of the bottom portion 33'.

For the embodiment of Figure 4a, the width wₜ^{'} is preferably within a range of 4% to 10% of the total radial height h' and/or less than 20% of the maximum axial width wₘₐₓ^{'} of the intermediate portion 32' / the entire groove 30'. In an example, the width wₜ^{'} is within a range of 0.5 mm to 2 mm, preferably to 1.5 mm.

The maximum width of the groove 30' or the intermediate portion 32' Wₘₐₓ^{'} is preferably within a range of 20% to 50%, preferably from 30% to 50% of the total radial height h', and/or in an example within a range of 4 mm to 9 mm, or preferably 5 mm to 8 mm.

The width W_{b}^{'} is preferably in a range of 30% to 60% of Wₘₐₓ and/or within a range of 10% to 25%, preferably 15% to 25% of the height h'. In an example, the width W_{b}^{'} may be within a range of 1.5 mm to 4 mm, or from 2 mm to 3.5 mm.

The total height h' is optionally within a range of 10 mm to 30 mm (alternatively from 10 mm to 25 mm or to 20 mm).

The height hₜ^{'} is preferably within a range of 15% (or 20%) to 40% (or 30%) of the radial height h', and/or 2 mm to 7 mm, preferably from 3 mm to 6 mm.

The height hᵢ^{'} is preferably within a range of 20% to 40% of the radial height h', and/or preferably within a range of 4 mm to 6 mm.

The height h_{b}^{'} is preferably within a range of 35% to 55% of the radial height h', and/or from 4 mm to 8 mm.

At least one of the sidewalls 35', 36' (and/or straight sections thereof), tapering in the bottom portion 33', encloses an angle β^{'} with the axial direction, which is preferably within a range of 65° to 80°, preferably from 70° or 71° to 79° or 75°.

The intermediate portion 32' has preferably an inflection point between its radial top and radial bottom. In this inflection point, a sidewall 35', 36' has preferably an angle α^{'} with the axial direction a within a range of 30° to 55°, preferably from 35° to 50°. In addition, or alternatively, a straight section of a sidewall 35', 36' encloses in the intermediate section 32' an angle α^{'} with the axial direction a within a range of 30° to 55°, preferably from 35° to 50°.

Figure 4b shows a magnified view of a shoulder groove 20', at essentially the same scale as the (center) tread groove 30' shown in Figure 4a. The total height of the groove 20' is shown as H' and essentially corresponds in this example to the height h' of tread groove 30'. The sidewalls 25', 26' of the shoulder groove 20', which taper in a radially inner direction, have an absolute angle γ' with the axial direction, which is within a range of 75° to 85°. The shoulder groove width at the (radially outermost) groove opening to the (outermost) tread surface is indicated as W, which is within a range of 60% to 80% of the total radial groove height H', and which may be for instance from 9 mm to 14 mm or from 10 mm to 13 mm. The width W_{b}' is measured at a position of 5% of the radial height H' and can be within a range of 15% to 35% of H', and/or from 25% to 40% of W, and/or from 3 mm to 7 mm, preferably from 4 mm to 6 mm.

In general, the treads 10, 10' may have further axial/lateral grooves not depicted herein. They may also have sipes, such as winter/snow sipes and/or zig-zag sipes. They may also have additional grooves extending in further directions and/or depths.

Grooves mentioned herein can typically have two opposite sidewalls and/or may have opposite sidewalls extending from a groove bottom in a radially outer direction with opposite angles. In particular, opposite sidewalls (or portions or sections thereof) may have opposite angles such that the sidewalls taper from a radially outer position to a radially inner position with such opposite angles.

The description of groove geometries and/or designs assumes herein a new and/or unworn tire if not otherwise indicated. Groove width and/or cross-sectional shape will (intentionally) change upon wear of the tire tread.

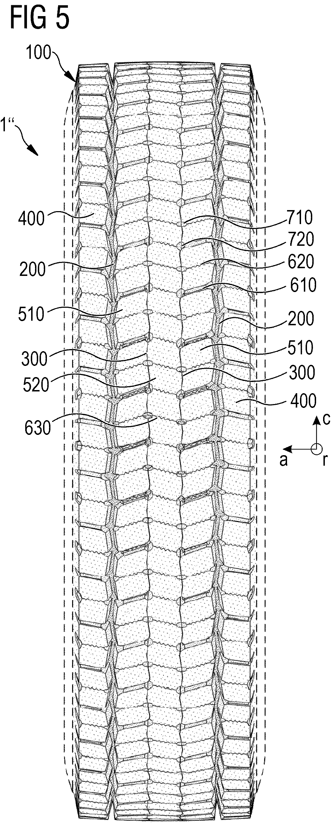

Figure 5 shows a perspective sideview of another tire 1" in accordance with a preferred embodiment of the present invention. The tire 1" comprises a tread 100 having two shoulder ribs 400. Each shoulder rib 400 comprises a circumferential row of shoulder tread blocks. Furthermore, tire 1" has a tread center portion comprising three tread center ribs comprising two axially outer center ribs 510 and an axially inner center rib 520 which is arranged along the equatorial plane of the tire (not explicitly shown). Each of the center ribs 510, 520 comprises a circumferential row of tread blocks which are separated by lateral grooves. In particular, center rib 520 comprises tread blocks separated by lateral grooves comprising zig-zag sipes 630. The axially outer center ribs 510 comprise tread blocks which are also separated by lateral grooves comprising zig-zag sipes. However, while every second tread block of an axially outer center rib 510 is separated from its circumferentially adjacent tread block by a groove 620 comprising a zig-zag sipe, similar to the grooves 630, its remaining tread blocks are separated by a groove 610 which comprises a sipe (particularly a zig-zag sipe) only in a radially lower portion of the groove 610. In other words, in the grooves 620 and 630, a respective zig-zag sipe extends to the radially outermost surface of the adjacent tread blocks, whereas in groove 610, the zig-zag sipe extends only over a portion of the total radial depth of the groove 610. A radial top portion of the groove 610 is circumferentially broader than its zig-zag sipe and laterally essentially linear or straight.

In accordance with the present embodiment of the invention, the tire 1" further comprises circumferential tread grooves 300 axially separating axially adjacent center ribs 510, 520. In this case the tire 1" has two such circumferential tread grooves 300. Preferably, these grooves 300 have over at least 50% of their circumferential length a cross-section which has been described in other embodiments herein. In particular, this applies to the cross-section between two axially neighboring tread blocks of two axially neighboring tread center ribs 510, 520.

As further shown in Figure 5, the lateral grooves 610, 620, 630 have cut-outs 710, 720 at their respective axially outer ends. In particular, these cut-outs 710, 720 extend in a radial direction to the bottom of the lateral and/or circumferential grooves. In other words, preferably, a cut-out is provided at each of the four corners of a tread block. At positions in which four corners of four tread blocks are facing and/or neighboring one another, the cut-outs of these four neighboring corners form together a radially extending channel, which preferably extends from the radially outer surface of the tread 100 to the bottom of the adjacent lateral grooves.

In addition, the tread 100 has two circumferential shoulder grooves 200 which have over at least 50% of their circumferential length a V-shaped cross-section. This particularly applies to cross-sections between axially neighboring tread blocks.

The invention and/or one or more of its embodiments provide an improved tread design. In particular, groove designs disclosed herein can help to improve tread stiffness and/or rolling resistance in early tire life. The increased tread stiffness also helps to improve treadwear in early tire life. Moreover, wet traction may be improved, especially when the tread is partially worn. In other words, the suggested groove design can help to improve treadwear and/or rolling resistance by at least partially increasing tread stiffness when there is higher void from tread features (such as lateral grooves, sipes, etc.). When tread features are not as abundant, the groove width increases to improve worn traction and/or water evacuation. The groove cross-sections suggested herein can also allow easier demolding and/or have reduced stone holding properties.

The above-mentioned aspects, their embodiments and features may be combined with one another.

## Claims

1. A tire comprising a tread (10) having a tread groove (30) extending continuously in the circumferential direction, wherein the tread groove (30) as a top portion (31), a bottom portion (33) and a transition portion (32) located radially between the top portion (31) and the bottom portion (33), wherein
(i) a maximum axial width of the tread groove (30) in the top portion (31) is 2 mm, wherein the tread groove (30) has axially opposed sidewalls (25, 26), and wherein the axially opposed sidewalls are tapered towards each other in the bottom portion (33) when moving radially inwards, and wherein the opposed sidewalls in the transition portion (32) are tapered away from each other when moving radially inwards; and/or
(ii) the tread groove (30) has over most of its circumferential length a cross-section in which a maximum axial width in the top portion (31) is at least 5% smaller than an axial width in the bottom portion (33), as measured at 5% of a total radial height of the tread groove (30) from the bottom of the tread groove (30), in which the axial width in the bottom portion (33), as measured at 5% of the total radial height of the tread groove (30) from the bottom of the tread groove, is at least 5% smaller than a maximum axial width of the tread groove (30) in the intermediate portion (32), and in which the maximum axial width of the tread groove (30) in the intermediate portion (32) is within a range of from 15% to 50% of the total radial height of the tread groove (30).

2. The tire according to claim 1, wherein the bottom portion (33) has a minimum axial width (W_{b}) in the range of from 1.5 mm to 3.5 mm and/or wherein the tread groove (30) has a maximum axial width (Wₘₐₓ) in the range of from 4 mm to 9 mm or from 5 mm to 7 mm.

3. The tire according to claim 1 or 2, wherein the tread groove (30) overall has its maximum axial width (Wₘₐₓ) in the transition section; and/or wherein the ratio of tread groove's overall maximum axial width (Wₘₐₓ) to the bottom portion's minimum axial width (W_{b}) is in the range of from 1.5 to 2.5.

4. The tire according to at least one of the previous claims, wherein the tread groove's overall maximum axial width (Wₘₐₓ) is located at a radial height in the range of from 40-60% of the tread groove's total radial height or at 50% of the tread groove's total radial height, as measured in the radial direction from the bottom of the tread groove (30).

5. The tire according to at least one of the previous claims, wherein the tread groove (30) is located on the centerline of the tread (10).

6. The tire according to at least one of the previous claims, wherein the tread groove's overall maximum axial width (Wₘₐₓ) is one or more or all of:
less than 50% of the maximum axial width of a shoulder groove (20);
more than 30% of the maximum axial width of a shoulder groove (20);
20% to 45% of the total radial height of one or more of the tread groove (30) and the shoulder groove (20);
present at a radial height within a range of 35% to 65% of the total height of the tread groove (30), as measured in the radial direction from the bottom of the tread groove (30).

7. The tire according to at least one of the previous claims, wherein a total cross-sectional area of the tread groove (30) is one or more of:
less than 35% of a total cross-sectional area of a shoulder groove (20);
more than 15% of a total cross-sectional area of a shoulder groove (20).

8. The tire according to at least one of the previous claims, wherein the maximum axial width of the top portion (31) of the tread groove (30) is one or more of:
less than 25% of the overall maximum axial width of the tread groove (30);
more than 10% of the overall maximum axial width of the tread groove (30);
less than 10% of a maximum axial width of a shoulder groove (20);
more than 3% of the maximum axial width of a shoulder groove (20).

9. The tire according to at least one of the previous claims, wherein the tread (10) comprises at least one shoulder groove (20), preferably shoulder groove (20) extending continuously in the circumferential direction, the at least one shoulder groove (20) having one or more or all of:
an essentially V-like shape;
two sidewalls (25, 26) making axially opposing angles within a range of from 75° to 85° with the axial direction;
a shape tapering from its radially outermost portion to its radially innermost bottom.

10. The tire according to at least one of the previous claims, wherein the tread groove (30) has an amphora-like cross-sectional shape.

11. The tire according to at least one of the previous claims, wherein the tread groove (30) has at 5% of its total radial axial height, as measured from the bottom of the tread groove, an axial width within a range of from 30% to 60% of the overall maximum axial width of the tread groove (30).

12. The tire according to at least one of the previous claims, wherein each sidewall (25, 26) of the tread groove (30) has in the intermediate portion (32) an inflection point radially between a tread groove radial height of its maximum axial thickness in the intermediate portion (32) and a tread groove radial height of its minimum axial thickness in the intermediate portion, and, optionally, wherein a tangent fitted in the inflection point of the sidewall has an angle with the axial direction within a range of from 25° to 60°.

13. The tire according to at least one of the previous claims, wherein the tire tread (10) comprises two shoulder portions comprising a first tread shoulder portion and a second tread shoulder portion, a center portion arranged axially between the two shoulder portions, wherein the first tread shoulder portion comprises a first circumferential shoulder rib (40) and the second tread shoulder portion comprises a second circumferential shoulder rib (40) and wherein each shoulder rib (40 is delimited axially inwards by a circumferential shoulder groove (20), wherein the tread center portion comprises at least two adjacent circumferential tread ribs (50) delimiting a circumferential tread groove (30),

14. The tire according to at least one of the previous claims, wherein, in the cross-section, the top portion (31) extends over 20% to 40% of the total radial height of the tread groove (30) and/or wherein, in the cross-section, the bottom portion (33) extends from the radial height of the maximum axial width of the intermediate portion (32) to the bottom of the tread groove (30).

15. The tire tread according to at least one of the previous claims, wherein, in the cross-section,
(i) the bottom portion (33) has one or more or all of:
a radial height within a range of 35% to 65% of the total radial height of the tread groove (30);
two opposite sidewalls tapering along an inner radial direction;
two opposite sidewalls, wherein at least one of the sidewalls has an angle with the axial direction which is within a range of from 65° to 85°;
and/or wherein, in the cross-section,
(ii) the top portion (31) has one or more of:
parallel sidewalls;
straight sidewalls;
two sidewalls extending in parallel to the radial direction;
a constant width along the radial height;
a maximum axial width within a range of from 1% to 10% of the total radial height of the tread groove (30);
a radially innermost end at a radial height within a range of 55% to 80% of the total radial height of the tread groove (30), as measured in the radial direction from the bottom of the tread groove (30).
